# EUROPÄISCHE PATENTANMELDUNG

(11) **EP 0 696 863 A2**
(43) Veröffentlichungstag der Anmeldung: **14.02.1996**
(21) Anmeldenummer: 95112203.5
(22) Anmeldetag: 03.08.1995
(51) Int. Cl.: H04M 1/00

(54) **Telekommunikationsgerät**

(30) Priorität: 09.08.1994 DE 4428068
(71) Anmelder: Alcatel SEL Aktiengesellschaft, D-70435 Stuttgart (DE)
(72) Erfinder: Bergler, Frank, D-75223 Niefern (DE); Käuffert, Uwe, D-75180 Pforzheim (DE)
(74) Vertreter: Knecht, Ulrich Karl

(57) **Zusammenfassung**

Ein Telekommunikationsendgerät soll unter Verwendung einfacher Mittel um eine Vielzuahl von Funktionen erweitert werden können.

Das Telekommunikationsendgerät setzt sich aus einem digitalen Signalprozessor (DSP), einer Schnittstelle (LS, V.24, PCMCIA-S) zum Eingaben von Software und Mitteln zum Starten der Eingage und einer Ausführung der Software zusammen. Software zur Ausführung von Basisfunktionen ist fest implementiert und Software zur Ausführung von Sonderfunktionen wird wahlweise über die Schnittstelle (LS, V.24, PCMCIA-S) aufgerufen und geladen.

## Beschreibung

Die Erfindung betrifft ein Telekommunikationsendgerät, das Basisfunktionen und/oder Sonderfunktionen ausführen kann.

Telekommunikationsendgeräte, insbesondere Standard-Fernsprechapparate, sind mit einer immer größer werdenden Vielfalt an Leistungsmerkmalen auf dem Markt zu haben. Hierbei wird zwischen sogenannten Apparatekategorien unterschieden, welche sind: Einteilige Apparate die kompakt, preislich attraktiv und Basismerkmale wie Mehrfrequenzwahl, Gabelschlag und Wahlwiederholung aufweisen. Dazu gibt es eine einzige Leiterplatte mit den entsprechenden elektronischen Komponenten, integriert in dem Telefonhörer.

Zweiteilige Apparate deren Anzahl an ausführbaren Leistungsmerkmalen variiert von entsprechenden Leistungsmerkmalen wie bei den einteiligen Apparaten bis zu Apparaten mit einem "Spitzenkomfort".

Desweiteren gibt es noch schnurlose Telefone, und für weitere Funktionen eigene Geräte, wie z.B. einen Anrufbeantworter.

Die Struktur der klassischen elektronischen Fernsprechapparate wurde hierbei von den herkömmlichen elektromechanischen Telefonen übernommen. Hierbei erfordern neue Leistungsmerkmale aber neue Komponenten oder Chips, durchschnittlich etwa einen Schaltkreis pro Funktion. Demgemäß ist eine Erweiterung eines bestehenden Endgerätes mit einer festgelegten Anzahl an Leistungsmerkmalen nicht problemlos möglich, genauso wenig wie die Adaption eines Gerätes an unterschiedliche Ländervarianten ("Standard-Fernsprechapparate"; von: D. Andersen et al, aus: Elektrisches Nachrichtenwesen, Band 63, Nummer 1, 1989, Seiten 32 bis 38).

In einem weiteren Beispiel aus dem Stand der Technik wird ebenfalls beschrieben, daß die wesentlichen Funktionen eines ISDN-Apparates durch "Firmware" realisiert wird. Mit Hilfe der Firmware werden die Kommunikations- und Apparatesteuerungsfunktionen, aber auch Komfortleistungsmerkmale ausgeführt. Eine Erweiterung bestehender Apparate wird durch Hinzufügen neuer Schaltungs- und Firmwarekomponenten erreicht oder durch Austausch von Teilen ("Sprachendgeräte im ISDN - vom Pilotprojekt zur Serie", von: Hellmut Saupe, aus: Frequenz 42 (1988) 2/3, Seiten 60 bis 65).

Aufgabe der Erfindung ist es, ein Telekommunikationsendgerät zu schaffen, das mit einfachen Mitteln so erweitert werden kann, daß es eine Vielzahl von Basisfunktionen und Sonderfunktionen ausführen kann.

Dies wird erfindungsgemäß erfüllt durch die Lehre des ersten und fünften Patentanspruchs.

Vorteilhaft hierbei ist, daß jedes erfindungsgemäß ausgebildete Telekommunikationsendgerät in die Lage versetzt werden kann, jede beliebige Funktion, also auch jede Sonderfunktion ausführen kann.

Zudem ist die Erweiterung kostengünstig realisierbar und die Telekommunikationsendgeräte können in ihrer räumlichen Ausdehnung klein ausgebildet werden.

Weiterhin vorteilhaft ist, daß jeder Benutzer des Telekommunikationsendgerätes die für ihn wichtigten Funktionen jederzeit zur Verfügung hat, oder es zumindest ohne großen Aufwand möglich ist, die neuen Funktionen innerhalb kürzester Zeit zu implementieren und bereitzustellen.

Weitere vorteilhafte Ausgestaltungen sind den Unteransprüchen 2 bis 4 und 6 bis 7 zu entnehmen.

Nach Unteranspruch 2 ist hierbei vorteilhaft, daß über eine PCMCIA-Karten-Schnittstelle mit einer PCMCIA-Karte neue Sonderfunktionen dem Telekommunikationsendgerät zur Verfügung gestellt werden. Dabei stellen PCMCIA-Karten eine kompakte und praktikable Lösung dar.

Im folgenden wird die Erfindung anhand von Ausführungsbeispielen und anhand von Figuren näher erläutert. Folgende Figuren zeigen:
- Fig. 1: Blockschaltbild eines Telekommunikationsendgerätes mit
a) einer Leitungsschnittstelle
b) einer V.24 Schnittstelle
c) einer PCMCIA-Kartenschnittstelle,
- Fig. 2: Ablaufdiagramm eines Verfahrens nach Anspruch 5.

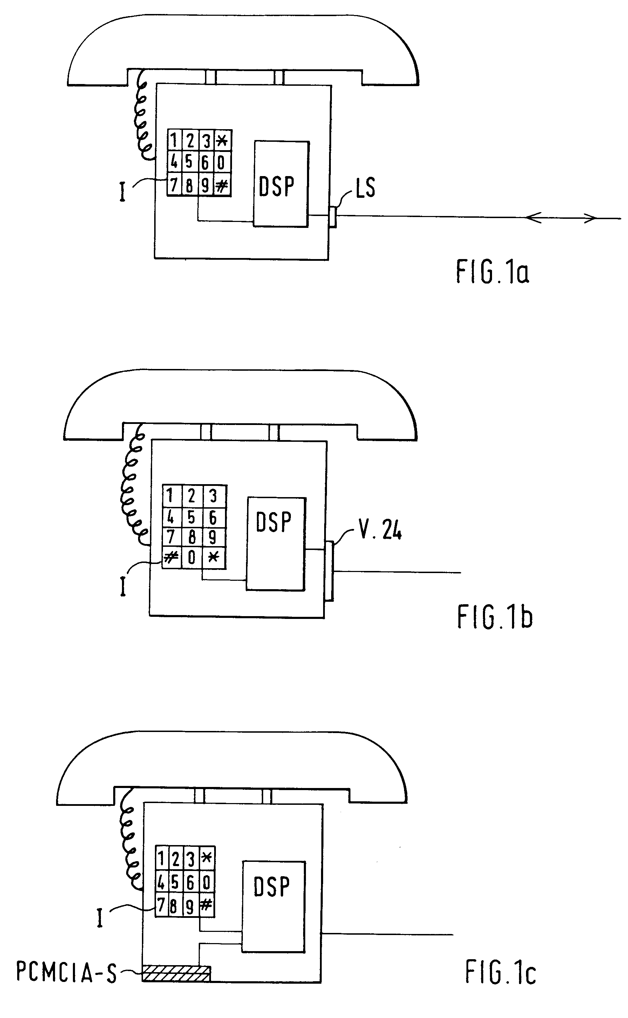

Im folgenden wird anhand von den Figuren 1a, 1b, 1c die Erfindung gemäß Anspruch 1 näher erläutert.

Ein Telekommunikationsendgerät besteht aus einem digitalen Signalprozessor DSP. Hierbei sind unterschiedliche Ausführungsformen des digitalen Signalprozessors denkbar, beispielsweise ein Signalprozessor mit einem internen vielfach beschreib- und löschbaren Speicher, z.B. einen Flash-EPROM, oder aber mit einem einmalig beschreibbaren Speicher, der aber immer wieder ausgelesen werden kann, z.b. einem EPROM.

Der digitale Signalprozessor DSP dient zur Speicherung von Software zur Ausführung von Basisfunktionen und/oder Sonderfunktionen. Unter Basisfunktionen soll hierbei unter anderem solche verstanden werden, die das Telekommunikationsendgerät ISDN-fähig machen. Die Sonderfunktionen können beliebig denkbare Funktionen sein, wie dies später noch erläutert wird.

Der digitale Signalprozessor DSP dient zur Steuerung der Ausführung der Basisfunktionen und/oder zur Steuerung der Ausführung der Sonderfunktionen.

Das Telekommunikationsendgerät besteht desweiteren aus einer Schnittstelle LS, V.24, PCMCIA-S. Diese dient zum Eingeben von Software zur Ausführung von Sonderfunktionen.

Die Schnittstelle gemäß Fig. 1a ist hier als Leitungsschnittstelle LS ausgebildet, und gemäß Fig. 1b als V.24-Schnittstelle V.24. Nach Fig. 1c ist die Schnittstelle eine PCMCIA-Kartenschnittstelle PCMCIA-S.

Aufgrund der unterschiedlichen Ausführungsform der Schnittstelle, wird nach Fig. 1a Software zur Ausführung von Sonderfunktionen über z.B. eine Amtsleitung angefordert und entsprechend in das Telekommunikationsendgerät geladen. Zur Reduzierung des Speicherbedarfs wird dafür nur solche Software zur Ausführung von Sonderfunktionen geladen, die aktuell benötigt wird. Nach deren Benutzung wird die Software wieder gelöscht, und eine weitere Software kann geladen werden und die zuvor benutzte Software wird überschrieben.

Bei der Ausführung der Schnittstelle gemäß Fig. 1b, wird über die V.24-Schnittstelle, von einem Datenverarbeitungsendgerät, z.B. einem PC, die Software zur Ausführung geladen. Diese kann entweder gespeichert bleiben, oder nur zur einmaligen Verwendung Benutzt werden.

Nach Fig. 1c wird eine PCMCIA-Karte in die Schnittstelle eingeschoben. Auf der Karte ist die Software zur Ausführung von Sonderfunktionen gespeichert und es kann wahlweise darauf zugegriffen werden.

Das Telekommunikationsendgerät besteht ebenfalls aus Mitteln I zum Starten der Eingabe von Software und Ausführung der Sonderfunktionen über die Schnittstelle LS, V.24, PCMCIA-S.

Die Mittel I zum Starten der Eingabe dienen desweiteren zum Aufrufen und Bereitstellen von Software zur Ausführung von Basisfunktionen und/oder von Software zur Ausführung von Sonderfunktionen. Hierbei wird gespeicherte Software zur Ausführung von Basisfunktionen und/oder von Software zur Ausführung von Sonderfunktionen aus einem Speicher aufgerufen und für den digitalen Signalprozessor DSP bereitgestellt.

Die erwähnten Mittel I zum Starten können beispielsweise Tasten einer Tastatur sein, oder aber Mittel zur Eingabe über eine berührungsempfindliche Anzeigevorrichtung, einen sogenannten Touchscreen. Demgemäß wird beispielsweise über einen Tastendruck das Eingeben von Software zur Ausführung von Sonderfunktionen über die Schnittstelle LS, V.24, PCMCIA-S ausgelöst. Die Software wird dann wahlweise in dem digitalen Signalprozessor DSP gespeichert, oder steht für eine einmalige Benutzung zur Verfügung. Die Bereitstellung von Software zur Ausführung von Basisfunktionen und/oder von Software zur Ausführung von Sonderfunktionen wird ebenfalls mittels der Mittel I zum Starten ausgelöst.

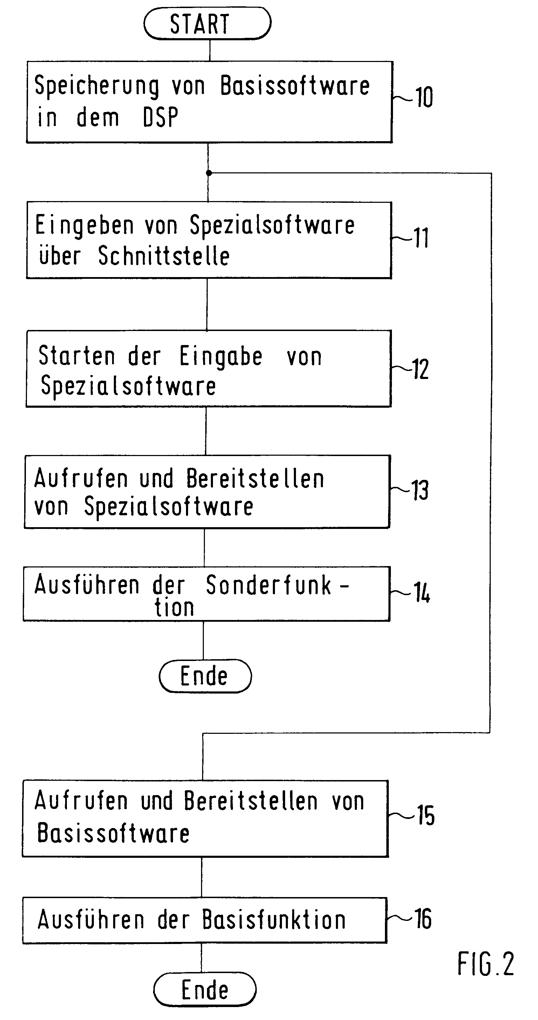

Im folgenden wird anhand von Fig. 2 das erfindungsgemäße Verfahren zur Ausführung von Basisfunktionen und Sonderfunktionen in einem Telekommunikationsendgerät erläutert, das einen digitalen Signalprozessor DSP enthält. Das Verfahren besteht aus den folgenden Schritten:
In einem ersten Schritt 10 wird Software zur Ausführung von Basisfunktionen, im folgenden Basissoftware genannt, in dem Speicher der digitalen Signalprozessor DSP gespeichert. Die Basissoftware kann wahlweise vor Inbetriebnahme in den Speicher des digitalen Signalprozessors DSP selbst gespeichert werden, oder aber ist bereits bei Neuanschaffung des Gerätes vorhanden. In einem nächsten Schritt 11 wird Software zur Ausführung von Sonderfunktionen, im folgenden Spezialsoftware genannt, über eine Schnittstelle LS, V.24, PCMCIA-S eingegeben. In einem nächsten Schritt 12 wird die Eingabe von Spezialsoftware gestartet. In einem darauffolgenden Schritt 13 wird die Spezialsoftware aufgerufen und für den digitalen Signalprozessor DSP bereitgestellt. In einem weiteren Schritt 14 werden die Sonderfunktionen ausgeführt.

Für den Fall, daß eine Basisfunktion ausgeführt werden soll, wird nach dem ersten Schritt 10 in einem nächsten Schritt 15 die bereits gespeicherte Basissoftware aufgerufen und dem digitalen Signalprozessor DSP zur Verarbeitung bereitgestellt. In einem weiteren, letzten Schritt 16 wird eine Basisfunktion ausgeführt.

Im folgenden wird eine Übersicht über die möglichen ausführbaren Sonderfunktionen gegeben. Ebenso werden die Basisfunktionen aufgeführt. Die folgenden Aufzählungen erheben keinen Anspruch auf Vollständigkeit, und geben nur einen Überblick über beliebige Funktionen.

Die in einem erfindungsgemäßen Telekommunikationsendgerät ausführbaren Basisfunktionen, sollen folgende sein:
- ISDN-Funktionalität
   Layer 1, 2, 3
- Datenspeicherung und Datenwiedergabe
Zu den ausführbaren Sonderfunktionen zählen beispielsweise folgende:
- Faxfunktionalität
   beispielsweise Fax-Gruppe 3
- Datenfunktionalität
   Nachbildung V.24-Schnittstelle
   Hayes Standard
   V.25-bis
   nach CCITT
   X.25 (Teletext, Fax-Gruppe 4)
   X.400
   X.21
- Videofunktionalität
   CCITT: H.221, H.261, H.242
   MPEG, JPEG
- ETHERNET
- ISDN-Funktionalität
   Benutzeroberfläche
- Audiofunktionalität
   Freisprechfunktion
- BTX-Funktionalität
- digitaler Anrufbeantworter, Sprachfunktionen (Spracherkennung usw.)

Alle diese Funktionen und Protokolle sollen ladbar in das Telekommunikationsendgerät sein. Die Verarbeitung der Protokolle und der Funktionen obliegt dem digitalen Signalprozessor DSP. Gemäß der vorstehenden Aufzählung ist ein Benutzer eines Telekommunikationsgerätes beispielsweise in der Lage durch Laden einer Software zur Ausführung von Sonderfunktionen, das Telekommunikationsendgerät derart zu erweitern, daß er ein Facsimile senden und empfangen kann, oder daß er einen digitalen Anrufbeantworter zur Verfügung hat. Die ausführbaren Sonderfunktionen sind erweiterbar auf eine Vielzahl von Funktionen jeglicher Art. Die Basisfunktionen sind verfügbar, aber sie sind ebenfalls jederzeit erweiterbar.

Mit fortschreitender Entwicklung eines digitalen Signalprozessors DSP, wie er heute bekannt ist, wird es auch möglich sein, Funktionen die eine Telekommunikationsanlage ausführt in einen digitalen Signalprozessors DSP ladbar zu machen. Beispielsweise wäre vorstellbar, daß diese Telekommunikationsanlagenfunktion über eine PCMCIA-Karte in einen digitalen Signalprozessors DSP geladen werden. Weiter wäre vorstellbar, daß die Software für die Funktion einer Telekommunikationsanlage über eine PCMCIA-Karte in ein Telekommunikationsendgerät geladen wird und von dort aus in die Telekommunikationsanlage weiter übertragen wird. Somit stünden die in dem digitalen Signalprozessors DSP der Telekommunikationsanlage gespeicherten Funktionen einer Vielzahl von Telekommunikationsendgeräten zur Verfügung.

## Patentansprüche

1. Telekommunikationsendgerät zur Ausführung von Basisfunktionen und/oder von Sonderfunktionen mit
- einem digitalen Signalprozessor (DSP) zur Speicherung von Software zur Ausführung von Basisfunktionen und/oder Sonderfunktionen und zur Steuerung der Ausführung der Basisfunktionen und/oder der Sonderfunktionen,
- einer Schnittstelle (LS, V.24, PCMCIA-S) zum Eingeben von Software zur Ausführung von Sonderfunktionen,
- Mittel (I) zum Starten der Eingabe von Software zur Ausführung der Sonderfunktionen über die Schnittstelle (LS, V.24, PCMCIA-S) und zum Aufrufen und Bereitstellen von Software für den digitalen Signalprozessor (DSP) zur Ausführung von Basisfunktionen und/oder von Sonderfunktionen.

2. Telekommunikationsendgerät nach Anspruch 1, bei der die Schnittstelle (LS, V.24, PCMCIA-S) zum Eingeben von Software eine PCMCIA-Karten-Schnittstelle (PCMCIA-S) oder eine V.24 Schnittstelle (V.24) oder eine Leitungsschnittstelle (LS) ist.

3. Telekommunikationsendgerät nach Anspruch 1, bei der die Mittel (I) zum Starten der Eingabe von Software, Tasten einer Tastatur sind oder Mittel zur Eingabe über eine berührungsempfindliche Anzeigevorrichtung sind.

4. Telekommunikationsendgerät nach Anspruch 1, bei der die Sonderfunktionen Funktionen zum Senden und Empfangen von Daten sind oder Funktionen zum Komprimieren und Abspielen von Videodaten sind oder Funktionen zum Senden und Empfangen von Facsimiles sind.

5. Verfahren zur Ausführung von Basisfunktionen und/oder Sonderfunktionen in einem Telekommunikationsendgerät, das einen digitalen Signalprozessor (DSP) enthält, bestehend aus den Schritten:
- Speicherung von Software zur Ausführung von Basisfunktionen in dem digitalen Signalprozessor (DSP),
- Eingeben von Software zur Ausführung von Sonderfunktionen über eine Schnittstelle (LS, V.24, PCMCIA-S),
- Starten der Eingabe von Software zur Ausführung der Sonderfunktionen,
- Aufrufen und Bereitstellen von Software zur Ausführung von Sonderfunktionen und/oder Basisfunktionen
- Ausführen der Basisfunktionen und/oder der Sonderfunktionen.

6. Verfahren zum Eingeben von Software zur Ausführung von Sonderfunktionen in ein Telekommunikationsendgerät gemäß Anspruch 1, bei dem
- eine Anforderung für Software zur Ausführung von Sonderfunktionen von den Mitteln (I) zum Starten über die Schnittstelle (LS, V.24, PCMCIA-S) gestellt wird,
- über die Schnittstelle (LS, V.24, PCMCIA-S) aus einem weiteren Mittel (II) die angeforderte Software ausgelesen wird und über die Schnittstelle (LS, V.24, PCMCIA-S) an den digitalen Signalprozessor (DSP) gegeben wird,
- der digitale Signalprozessor (DSP) die Ausführung der Sonderfunktionen steuert.

7. Verfahren nach Anspruch 6, bei dem die weiteren Mittel (II) ein Server in einer Telekommunikationsanlage ist, oder ein Datenverarbeitungsendgerät ist, oder eine PCMCIA-Karte ist.
